Europäisches Patentamt

European Patent Office

Office européen des brevets

(11) Veröffentlichungsnummer: **0 238 987**
B1

# (12) EUROPÄISCHE PATENTSCHRIFT

(45) Veröffentlichungstag der Patentschrift:
17.05.89

(21) Anmeldenummer: 87103923.6

(22) Anmeldetag: 18.03.87

(51) Int. Cl.⁴: **B29C 49/60**, B29C 49/46

�]④ Blasdorn für das Extrusionsblasen mit aggressiven Blasmedien.

(30) Priorität: 27.03.86 DE 3610389

(43) Veröffentlichungstag der Anmeldung:
30.09.87 Patentblatt 87/40

(45) Bekanntmachung des Hinweises auf die Patenterteilung:
17.05.89 Patentblatt 89/20

(84) Benannte Vertragsstaaten:
DE ES FR IT SE

(56) Entgegenhaltungen:
DE-A- 1 704 162
DE-A- 1 947 525
DE-A- 2 300 115
DE-A- 2 426 198

(73) Patentinhaber: HOECHST AKTIENGESELLSCHAFT,
Postfach 80 03 20, D-6230 Frankfurt am Main 80(DE)

(72) Erfinder: Neumann, Horst, Andreas-Faust-Strasse 11,
D-6233 Kelkheim (Taunus)(DE)
Erfinder: Busch, Manfred, Im Brühl 7,
D-6231 Sulzbach(DE)

**Beschreibung**

Die Erfindung betrifft einen Blasdorn für das Extrusionsblasen bestehend aus einem zylindrischen Teil und einem mit Gewinde versehenen Teil. Ein solcher Blasdorn ist bekannt aus der DE-A 1 704 162.

Die Fluorierung von Hohlkörpern aus HDPE ist ein Verfahren, um die Permeation von organischen Lösungsmitteln und von Motorkraftstoffen zu vermindern. Die Fluorierung erfolgt entweder in Form einer Nachbehandlung am fertig geblasenen Hohlkörper (off-line Fluorierung) oder während des Blasvorgangs bei der Herstellung des Hohlkörpers (in-line Fluorierung), wobei in dem bekannten Blasverfahren als Blasmedium anstelle von Luft oder Inertgas ein $F_2/N_2$-Gemisch verwendet wird.

Beim Hohlkörperblasen wird in den vom formgebenden Werkzeug aufgenommenen Polyethylen-Schlauch durch die Öffnung des Vorformlings zunächst der Blasdorn eingeführt, dann wird der Vorformling aufgeblasen, gekühlt und entformt.

Dabei gibt der Blasdorn dem im Formwerkzeug befindlichen geschmolzenen HDPE-Schlauch im Bereich der Öffnung des Hohlkörpers innenseitig die gewünschte Form und prägt zugleich den abschließenden oberen Rand des Hohlkörpers. Wenn der Dorn eingetaucht worden ist und der PE-Schlauch noch thermoplastisch ist, ist die Berührungsfläche Blasdorn/Polyethylen vielleicht noch gasdicht. Infolge der Abkühlung des Polyethylens, die durch die Berührung mit dem metallischen Dorn besonders schnell erfolgt, schwindet die Polyethylen-Masse, und das Blasmedium strömt zwischen der Dornoberfläche und der Öffnung des geblasenen Hohlkörpers heraus.

Wenn Luft als Blasmedium verwendet wird, ist es nicht erforderlich, daß der Übergang vom Blasdorn auf den im Formwerkzeug befindlichen Polyethylen-Schlauch und dem daraus entstehenden Polyethylen-Hohlkörper gasdicht ist. Um den geblasenen Körper im Formwerkzeug möglichst schnell abzukühlen, ist es sogar erwünscht, daß bei Aufrechterhaltung des erforderlichen Blasdruckes ein teil der Blasluft entweicht. Beim Blasen mit Gasgemischen, die agressive Bestandteile enthalten, ist es aber notwendig, daß der Übergang vom Blasdorn zum Kunststoff gasdicht abschließt. Anderenfalls würde ein Teil des Gasgemisches ungenutzt in die umgebende Luft entweichen. Dadurch erhöhen sich nicht nur die Fabrikationskosten, sondern auch apparative Schäden durch erhöhte Korrosion sind zu erwarten. Außerdem schädigen die agressiven Bestandteile der Gasgemische die Umwelt.

Es wurde nun gefunden, daß die Berührungsfläche Blasdorn/Polyethylen während der ganzen Zeitdauer des Blasvorgangs gasdicht gehalten werden kann, wenn man einen Blasdorn mit einem beweglichen Dichtelement verwendet.

Gegenstand der Erfindung ist somit der in den Ansprüchen beschriebene Blasdorn.

Der erfindungsgemäße Blasdorn besteht aus zwei Teilen, einem zylindrischen Teil, welcher in den Polyethylen-Vorformling eingeführt wird, und einem mit Gewinde versehenen Teil, mit welchem der Blasdorn an der Hohlkörper-Blasvorrichtung befestigt ist. Beide Teile sind im allgemeinen trennbar, können aber auch ein einziges Stück bilden. Zwischen beiden Teilen befindet sich das bewegliche Dichtelement.

Das bewegliche Dichtelement ist ein ringförmiger Körper, welcher den zylindrischen Teil des Blasdorns ringförmig umschließt und auf ihm hin und her gleiten kann. Das Dichtelement kann entweder ein Ring sein oder eine Hülse. Die zum aufzublasenden Vorformling weisende Fläche ist plan, der Querschnitt im allgemeinen rechteckig, wobei eine Hülse mit einer Verstärkung versehen ist, über welche eine Überwurfmutter greift und so das Herabfallen der Hülse verhindert. Je nach Art des agressiven Blasmediums besteht das Dichtelement aus einem widerstandsfähigen Metall, beispielsweise Kupfer, Messing oder Bronze, im Fall von $F_2$-haltigen Blasmedien vorzugsweise aus Kupfer. Die Abmessungen des Dichtelements richten sich nach der Größe des Blasdorns, die wiederum von der Art und Größe des herzustellenden Hohlkörpers abhängig ist.

Das Dichtelement wird durch ein Federelement gegen den aufzublasenden Vorformling gedrückt. Das Federelement kann eine Tellerfeder sein, ist jedoch vorzugsweise ein Formkörper aus einem gegen das aggressive Blasmedium beständigen Elastomeren, beispielsweise aus einem fluorierten Kautschuk im Falle eines fluorhaltigen Blasmediums. Die Abmessungen und die Federeigenschaften des Federelements richten sich nach den Abmessungen des Dichtelements.

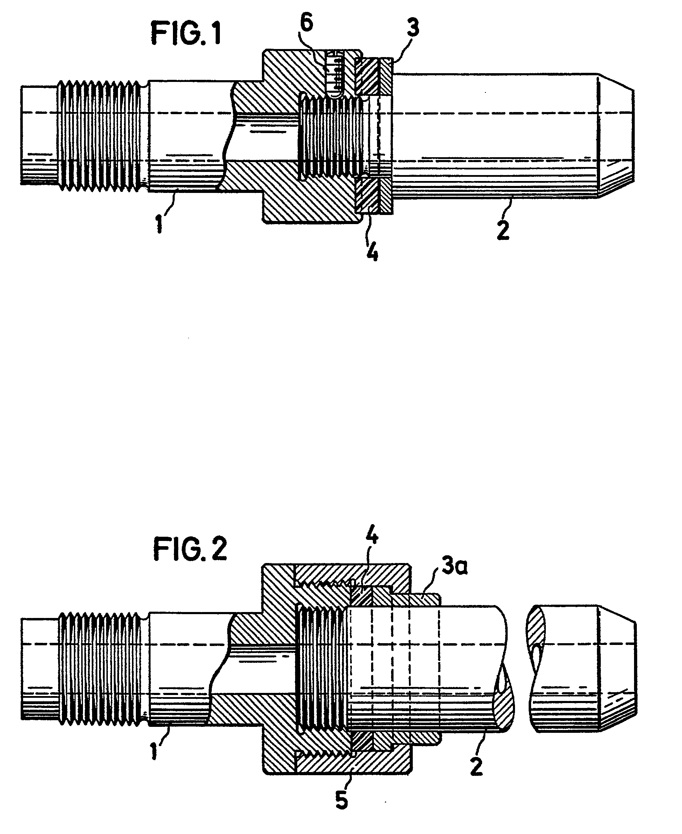

Die Figuren 1 und 2 zeigen zwei Ausführungsformen des erfindungsgemäßen Blasdorns in Teilansicht und Teil-Längsschnitt.

Der Blasdorn gemäß Figur 1 besteht aus einem Teil (1), welches ein Gewinde zur Befestigung an der nicht gezeigten Hohlkörper-Blasvorrichtung besitzt, und einem zylindrischen Teil (2), welches in den Vorformling eintaucht. Beide Teile sind durch ein Gewinde miteinander verbunden. An der dem hinteren Teil (1) zugewandten Seite des Teils (2) ist auf einer Verjüngung verschiebbar angeordnet das ringförmige Dichtelement (3) aus Kupfer. Dahinter ist das Federelement (4), ein Ring aus einem fluorierten Kautschuk, angebracht. Dichtelement (3) und Federelement (4) werden durch die zusammengeschraubten Blasdornteile (1) und (2) in ihrer Position gehalten. Die Verschraubung kann durch eine Madenschraube (6) gesichert werden.

Der Blasdorn gemäß Figur 2 stellt eine verbesserte Form des Blasdorns gemäß Figur 1 dar. Auch dieser Blasdorn ist zweiteilig und besteht aus dem Teil (1) und dem zylindrischen Teil (2), er könnte im vorliegenden Fall allerdings ebensogut aus einem einzigen Stück bestehen. Das bewegliche Dichtelement (3a) umfaßt als Hülse aus Kupfer das zylindrische Teil (2) und wird durch die Überwurfmutter (5) festgehalten. Das Federelement (4) besteht wiederum aus einem fluorierten Kautschuk.

Beim Eintauchen des Blasdorns in einen noch nicht aufgeblasenen Vorformling legt sich das Dichtelement auf die obere Öffnung des Vorformlings und drückt das überschüssige Polyethylen zur Seite. Das beim Abkühlen des Hohlkörpers stattfindende Schwinden bewirkt, daß das Federelement das Dichtelement weiterhin auf die obere Öffnung des Hohlkörpers drückt. Es wurde gefunden, daß die Berührungsflächen Blasdorn/Polyethylen auch bei einem Druck des Blasmediums von 5 bar gasdicht bleiben.

Der erfindungsgemäße Blasdorn kann beim Einsatz verschiedener aggressiver Blasmedien Verwendung finden. Infrage kommen Blasmedien, die neben Luft oder einem Inertgas beispielsweise $Cl_2$, $F_2$, $ClF_3$ oder $ClF_6$ enthalten.

**Patentansprüche**

1. Blasdorn für das Extrusionsblasen mit aggressiven Blasmedien bestehend aus einem zylindrischen Teil (2) und einem mit Gewinde versehenen Teil (1), dadurch gekennzeichnet, daß sich zwischen dem zylindrischen Teil (2) und dem mit Gewinde versehenen Teil (1) ein den Teil (2) ringförmig umschließendes bewegliches Dichtelement (3) bzw. (3a) aus einem gegen das Blasmedium beständigen Metall und ein Federelement (4) befinden.

2. Blasdorn nach Anspruch 1, dadurch gekennzeichnet, daß das Dichtelement (3) ein Ring mit rechteckigem Querschnitt ist.

3. Blasdorn nach Anspruch 1, dadurch gekennzeichnet, daß das Dichtelement (3a) eine Hülse ist.

4. Blasdorn nach Anspruch 1, dadurch gekennzeichnet, daß das Federelement ein Formköper aus einem gegen das Blasmedium beständigen Elastomeren ist.

**Claims**

1. A blow mandrel for extrusion blow molding with an aggressive blow medium, consisting of a cylindrical part (2) and a part with a thread (1), wherein between the cylindrical part (2) and the part (1) with a thread is located a movable sealing element (3) or (3a), encircling the part (2), of a metal which is resistant towards the blow medium and a spring element (4).

2. A blow mandrel as claimed in claim 1, wherein the sealing element (3) is a ring with a rectangular cros-section.

3. A blow mandrel as claimed in claim 1, wherein the sealing element (3a) is a shell.

4. A blow mandrel as claimed in claim 1, wherein the spring element is a molded article of an elastomer which is resistant towards the blow medium.

**Revendications**

1. Mandrin de soufflage pour effectuer un soufflage d'extrusion avec des agents de soufflage agressifs, se composant d'une partie cylindrique (2) et d'une partie (1) pourvue d'un filetage, caractérisé en ce qu'il est prévu entre la partie cylindrique (2) et la partie (1) pourvue d'un filetage un élément d'étanchéité (3) ou (3a) mobile, entourant la partie (2) avec une forme annulaire et se composant d'un métal résistant à l'agent de soufflage, ainsi qu'un élément élastique (4).

2. Mandrin de soufflage selon la revendication 1, caractérisé en ce que l'élément d'étanchéité (3) est un anneau de section droite rectangulaire.

3. Mandrin de soufflage selon la revendication 1, caractérisé en ce que l'élément d'étanchéité (3a) est un fourreau.

4. Mandrin de soufflage selon la revendication 1, caractérisé en ce que l'élément élastique est un corps de forme constitué d'un élastomère résistant à l'agent de soufflage.

FIG.1

FIG.2